Europäisches Patentamt

European Patent Office

Office européen des brevets

(11) Publication number: **0 429 680 A1**

# EUROPEAN PATENT APPLICATION
## published in accordance with Art. 158(3) EPC

(21) Application number: 90909400.5

(22) Date of filing: 22.06.90

(86) International application number:
PCT/JP90/00815

(87) International publication number:
WO 90/16019 (27.12.90 90/29)

(51) Int. Cl.5: **G05B 13/02**

(30) Priority: 22.06.89 JP 158406/89

(43) Date of publication of application:
**05.06.91 Bulletin 91/23**

(84) Designated Contracting States:
**DE GB SE Bulletin**

(71) Applicant: **KABUSHIKI KAISHA YASKAWA
DENKI SEISAKUSHO**
**2346, Ohaza-Fujita Yahatanishi-Ku
Kitakyushu-Shi Fukuoka-Ken806(JP)**

(72) Inventor: **MINAMI, Y. Yahata Kohjo Kab.Kaisha
Yaskawa Denki
Seisakusho 2346, Ohaza-Fujita
Yahatanishi-ku
Kitakyushu-shi Fukuoka806(JP)**
Inventor: **MOROMISATO, H. Yahata Kohjo
Kab.K. Yaskawa Denki
Seisakusho 2346, Ohaza-Fujita
Yahatanishi-ku
Kitakyushu-shi Fukuoka 806(JP)**
Inventor: **KOMORI, K. Yahata Kohjo
Kab.Kaisha Yaskawa Denki
Seisakusho 2346, Ohaza-Fujita
Yahatanishi-ku
Kitakyushu-shi Fukuoka 806(JP)**

(74) Representative: **Holdcroft, James Gerald, Dr.
et al
Graham Watt & Co., Riverhead
Sevenoaks, Kent TN13 2BN(GB)**

(54) **FUZZY CONTROL METHOD AND ROBOT HEIGHT PROFILE CONTROL METHOD USING THE SAME.**

(57) A control rule is changed in accordance with the magnitude of a system deviation which is one of the state quantities of a controlled system, and a control command which is the most suitable for following a set value is outputted.

# FUZZY CONTROL METHOD AND A HEIGHT FOLLOW-UP CONTROL METHOD IN A ROBOT

Field of the Invention

The present invention relates to a fuzzy control method for measuring the state of a controlled system, comparing a state with the predetermined value for evaluation of the state, expressing the measure value of the state as a value of a fuzzy variable and outputting a control command using membership functions representing the degree of satisfaction ranging from 0 to 1 and a control rule.

Description of the Prior Art

Advanced control methods cannot be utilized when the derivation of mathematical models of the controlled system is difficult or needs much time and cost. In such cases, an easy and effective means of control is believed to be made possible by the adoption of fuzzy logic as conceived by Dr. L. A. Zadeh, of the University of California, 1965.

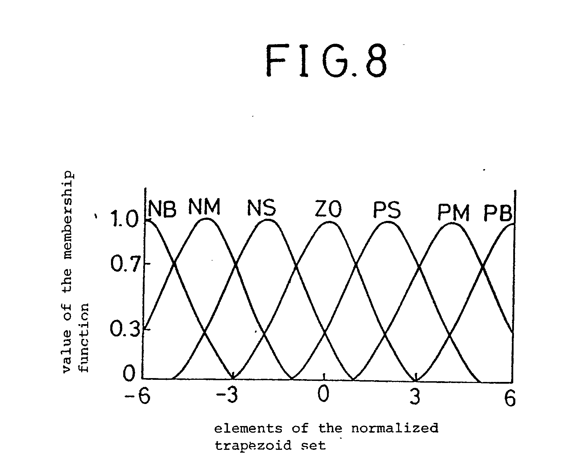

In fuzzy logic, a control algorithm is established by using a membership function and a control rule. The membership function is determined subjectively within a practical range and with no contradictions. The control rule is determined in such a way that it constructively adopts the know-how of skilled operators. Fuzzy labels often used in fuzzy control are PB (Positive Big), PM (Positive Medium), PS (Positiave Small), NS (Negative Small), NM (Negative Medium), NB (Negative Big) and so on. Membership functions for these fuzzy labels are represented as, for example, continuous functions as shown in Fig. 8. These fuzzy labels are usually determined with normalized trapezoid sets, for example, from -6 to 6 and from -1 to 1 so that they can commonly be used for various fuzzy variables. In the example of Fig. 8, the trapezoid set is normalized from -6 to 6. When using these normalized membership functions in practical control, the values of each fuzzy variable should be multiplied by a scaling factor (conversion factor) for the conversion of the membership functions into elements of the normalized trapezoid set.

A simple controlled system for maintaining a constant temperature will be considered as an example of a conventional fuzzy control. This controlled system compares the temperature, i.e., its state value with the predetermined value for the state evaluation, calculates a control command from the control rule with the fuzzy inference, and maintains the predetermined value as the temperature of the controlled system.

For fuzzy variables in the controlled system, the control deviation and the change in the control deviation from the time of the preceding sampling frequency to the present, represented by E and $\Delta E$, respectively, are employed as an inputs, i.e., the condition part of the control rule, and the change in the amount of operation (control command) represented by $\Delta U$ is employed as output, i.e., the conclusion part of the control rule.

Next, the control rules are established using fuzzy labels shown in Fig. 8. The mathematical expression of these control rules is shown in equation (1).

$$(Ei, \Delta Ei) \rightarrow Ui \quad (1)$$
$$i = 1, 2, ---, n \text{ (n is the number of the control rules)}$$

Ei is a fuzzy label to be substituted in the fuzzy label E in the control rule No. i. The element of the fuzzy labels Ei, $\Delta Ei$, $\Delta Ui$ are represented as e, $\Delta e$, $\Delta u$, respectively. The control rule expressed by equation (1) is shown by, for example, equation (2).

$$(NS, PS) \rightarrow PS \quad (2)$$

Equation (2) indicates a control rule showing that if the control deviation is negative and small, and the change in the control deviation is positive and small, the amount of operation should be positive and be increased a small amount.

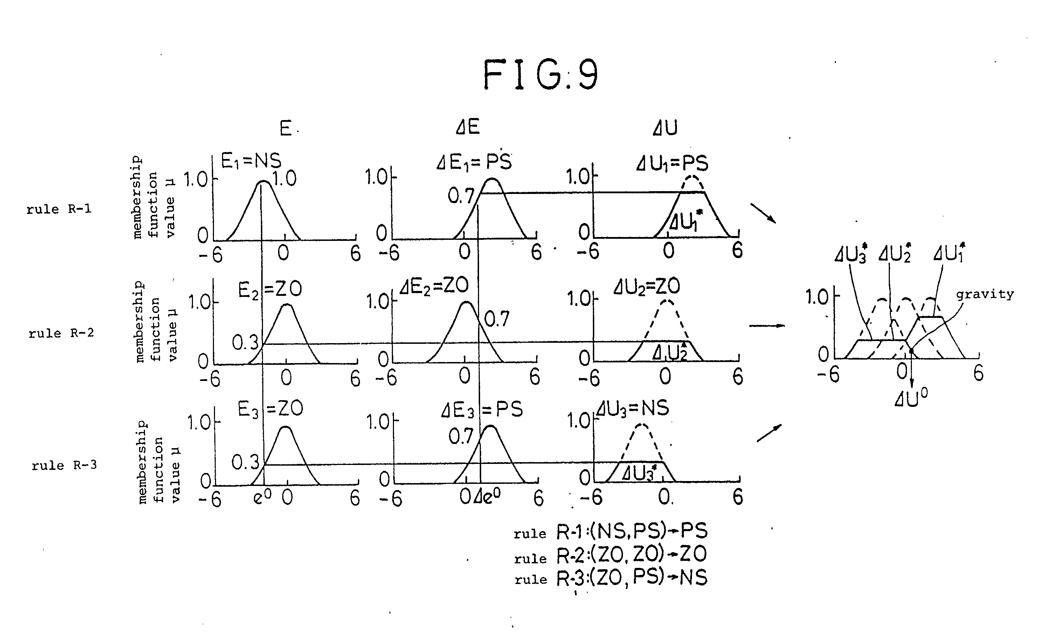

When there is a plurality of control rules expressed by the equation (1), the amount of operation at the time when $(e^\circ, \Delta e^\circ)$ are measured as inputs is obtained with the fuzzy inference. As an example, the Mamdani method which is often used in a control will be explained and shown in Fig. 9. When control states $(e^\circ, \Delta e^\circ)$ are inputted in rule R-1, rule R-2, rule R-3, the respective outputs $\Delta U_1$, $\Delta U_2$, $\Delta U_3$ are obtained as inference results, and the gravity $\Delta U^\circ$ of total areas by the superimposition of $\Delta U_1$, $\Delta U_2$, $\Delta U_3$

is outputted as a control command.

The aforementioned prior art is described in "Nikkei Mechanical" 1988.9.5 P.118-P.126.

However, the control method of the prior art has the following disadvantages. In the case of a large control deviation, the determination of a control rule which prioritizes immediate follow-up on a predetermined value would not permit the desired smooth control because the control commands for minute changes near the predetermined value become rough. On the other hand, although the determination of a control rule which prioritizes follow-up in the case of a small control deviation alone would permit a fine and smooth control for minute changes near the predetermined value, it would take a great deal of time in the follow-up to the predetermined value in the case of a large control deviation.

Summary of the Invention

It is an object of the present invention to provide a fuzzy control method and a height follow-up control method in a robot, which is capable of outputting optimum control commands to a controled system regardless of the magnitude of the control deviation.

According to the present invention, a fuzzy control method is provided for altering the control rule depending on the magnitude of the control deviation which is one of the measures of state, and outputting a control command which is optimum for the follow-up toward a predetermined value.

Since the fuzzy inference to be applied is determined depending on the magnitude of the control deviation, the optimum control command is always outputted regardless of the magnitude of the control deviation.

According to the present invention, a height follow-up control method is provided in a robot for comparing the distance between a tool and a workpiece, inputted from a height sensor, with a predetermined value, performing a fuzzy inference on the basis of the difference between the distance and the predetermined value and the change in the difference, and outputting a control command which enables the tool to follow up toward the predetermined value in a good response in the case of the absolute value of the difference being equal to or greater than a fixed value and a control command which enables the tool to perform a smooth follow-up operation in the case of said absolute value being smaller than said fixed value.

The above and other objects, features and advantages of the present invention will become more apparent from the following description when taken in conjunction with the accompanying drawings in which a preferred embodiment of the present invention is shown by way of illustrative example.

Brief Description of the Drawings

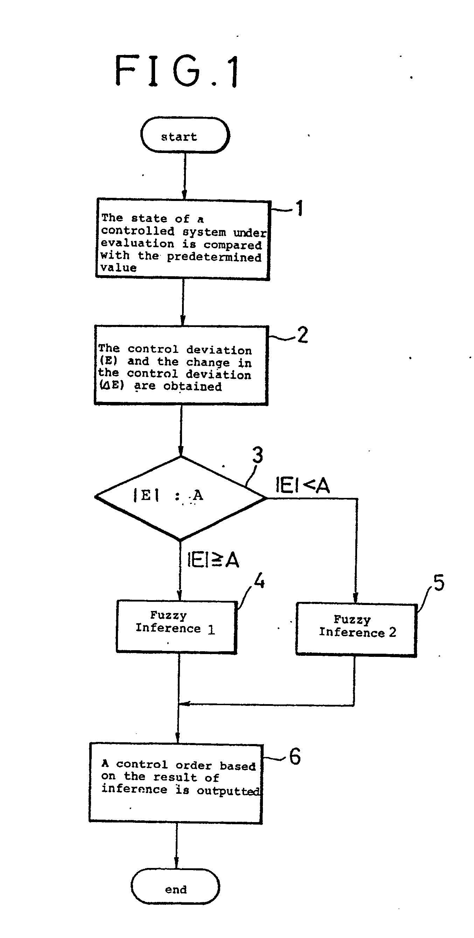

Fig. 1 is a flowchart showing a fuzzy control method according to an embodiment of the present invention;

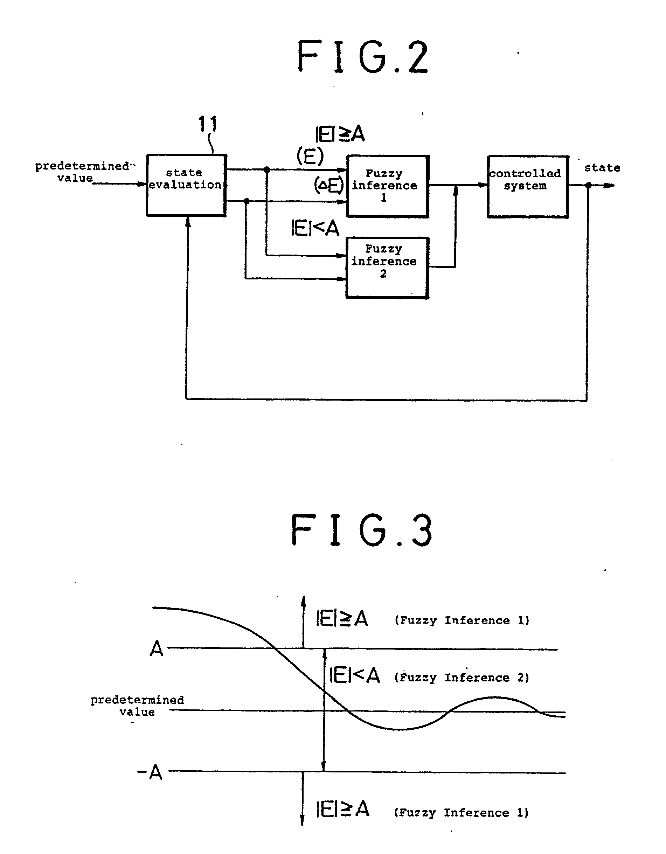

Fig. 2 is a control block diagram;

Fig. 3 is a view showing the relationship between an absolute value $|E|$ of a control deviation E and a fuzzy inference to be applied;

Figs. 4-7 are views showing another embodiment in which the present invention is applied to a height follow-up control in a robot;

Fig. 8 shows examples of membership functions to be given to fuzzy labels; and

Fig. 9 shows an example of fuzzy inference.

Detailed Description of the Preferred Embodiment

For simplicity of explanation, an embodiment will first be described with respect to a case having two kinds of fuzzy inference.

First, the state of a controlled system is compared with a predetermined value for evaluation of the state (step 1). At that time, fuzzy variables are evaluated for performing fuzzy inference. In general, a control deviation E showing a divergence of the state and a change $\Delta E$ in the control deviation E from the preceding sampling frequency to the present are utilized as the fuzzy variables. The control deviation E and the change $\Delta E$ are obtained (step 2). The absolute value $|E|$ is compared with a value A for the divergence of the inference (step 3), and if the absolute value $|E|$ is equal to or greater than the value A, the fuzzy inference 1 is performed (step 4), and if the absolute value $|E|$ is smaller than the value A, the fuzzy inference 2 is performed (step 5). The value A may be determined from experience values in the controlled system. Tables 1 and 2 represent rules in fuzzy control according to the present embodiment. The rules encircled by double frames in Tables 1 and 2 are adopted and the other rules are not adopted. In Table 1, for example, rule R1 is adopted, and rule R4 is not adopted. Rule R4 means that the state NB is taken as

3

an output when the change ΔE is at the state ZO. Fuzzy inference 1 is inferred on the basis of the rule that the ratio of the rules at the outside of the matrix is increased, as shown in Table 1, for an intermediate follow-up when the control deviation E is greater than the value A. The ratio of the rules at the outside of the matrix is increased by the adoption of Rule R6 and R44. This is effective when the control deviation E is large. Fuzzy inference 2 is inferred on the basis of the rule that the ratio of the rules at the innerside of the matrix is increased, as shown in Table 2, for a smooth follow-up with small vibrations. The ratio of the rules at the innerside of the matrix is increased by the adoption of rules R14 and R17. This is effective when the control deviation E is small. A control command which is optimum for the follow-up toward the predetermined value is output on the basis of the result of the inference (step 6).

Table 1

| | | change in the control deviation (ΔE) | | | | | | |
|---|---|---|---|---|---|---|---|---|
| | | NB | NM | NS | ZO | PS | PM | PB |
| control deviation (E) | NB | R1 | R2 | R3 | R4 NB | R5 | R6 NM | R7 |
| | NM | R8 | R9 NB | R10 | R11 | R12 | R13 | R14 |
| | NS | R15 | R16 | R17 | R18 NS | R19 | R20 ZO | R21 |
| | ZO | R22 | R23 | R24 | R25 ZO | R26 | R27 | R28 |
| | PS | R29 | R30 ZO | R31 | R32 PS | R33 | R34 | R35 |
| | PM | R36 | R37 | R38 | R39 | R40 | R41 PB | R42 |
| | PB | R43 | R44 PM | R45 | R46 PB | R47 | R48 | R49 |

Table 1

| | | change in the control deviation (ΔE) | | | | | | |
|---|---|---|---|---|---|---|---|---|
| | | NB | NM | NS | ZO | PS | PM | PB |
| control deviation (E) | NB | R1 | R2 | R3 | R4 NB | R5 | R6 | R7 |
| | NM | R8 | R9 NB | R10 | R11 | R12 | R13 | R14 NS |
| | NS | R15 NB | R16 | R17 NM | R18 NS | R19 | R20 ZO | R21 |
| | ZO | R22 | R23 | R24 | R25 ZO | R26 | R27 | R28 |
| | PS | R29 | R30 ZO | R31 | R32 PS | R33 PM | R34 | R35 PB |
| | PM | R36 PS | R37 | R38 | R39 | R40 | R41 PB | R42 |
| | PB | R43 | R44 | R45 | R46 PB | R47 | R48 | R49 |

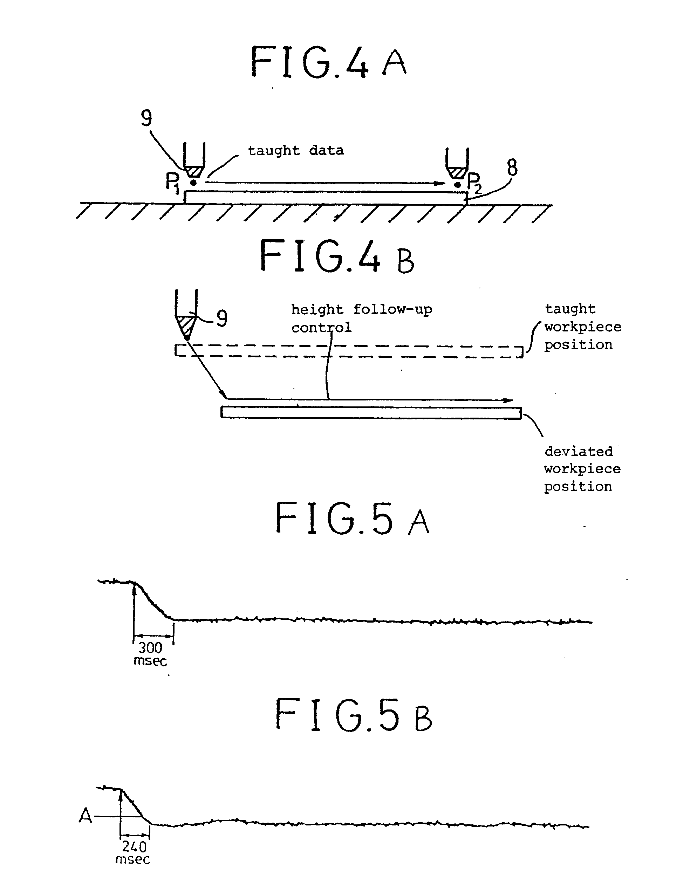

Another embodiment in which the fuzzy control method of the present invention is applied to a height follow-up control in a robot will be explained with reference to Figs. 4-7.

This is an embodiment in which a tool is moved along a workpiece 8 with a distance of, for example, 2 mm between the laser beam emitting end of the tool and the workpiece 8 for the laser-cutting of the workpiece. As shown in Fig. 4A, the teaching of the tool is executed from the point $P_1$ to the point $P_2$ with

5

EP 0 429 680 A1

the workpiece 8 being placed on the plane. Figs. 5A and 5B show a locus of the follow-up operation of the tool when the workpiece 8 deviates a great deal and parallel to the correct workpiece position, as shown in Fig. 4B. The fuzzy inference is performed by the comparison of the height data from a height sensor 9 (the distance between the height sensor 9 and the workpiece 8) with the predetermined value, i.e., by the comparison of the difference (the control deviation E) with the prior difference. At this time, the fuzzy inference 1 is performed because the workpiece 8 has deviated a great deal and therefore the control deviation |E| is greater than the value A for divergence of the inference. Consequently, the tool follows up to the predetermined value in a good response. When the tool follows up near the predetermined value and the control deviation |E| becomes smaller than the value A, fuzzy inference 2 is performed and thereby, the tool executes a smooth follow-up operation. Fig. 5A shows a locus of the tool according to a conventional fuzzy control method in which it takes 300 msec for the tool to reach the predetermined value. Fig. 5B shows a locus of the tool according to the present invention in which it takes 240 msec for the tool to reach the predetermined value providing that there is an improvement in time.

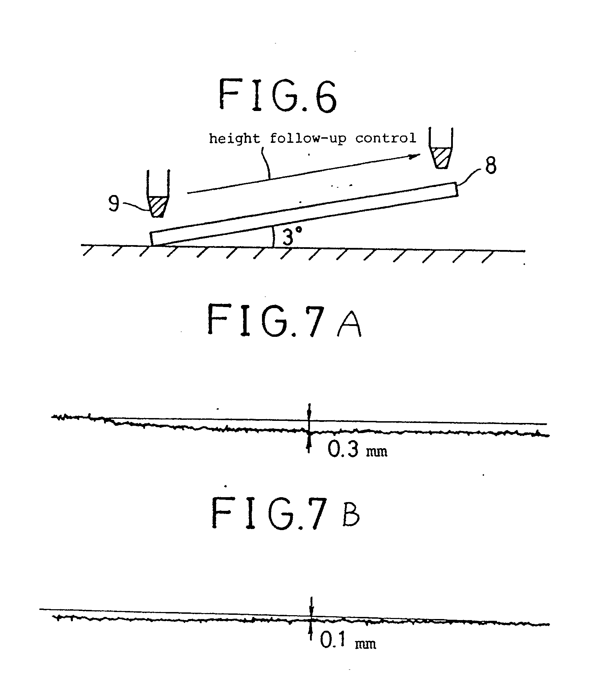

Fig. 7 shows a locus of the follow-up operation of the tool when the workpiece deviates with an inclination of 3° as shown in Fig. 6. In this case, since the control deviation E satisfies the condition |E| < A, the fuzzy inference 2 is performed and thereby, the tool executes a smooth follow-up operation near the predetermined value. While in Fig. 7A (conventional fuzzy control method), the error for the predetermined value (a solid line) is 0.3 mm, in Fig. 7B (the fuzzy control method according to the present invention), the error is 0.1 mm, proving that there is an improvement.

## Claims

1. A fuzzy control method for measuring the state of a controlled system, comparing a state with the predetermined value for evaluation of the state, expressing the measured value of the state as a value of a fuzzy variable and outputting a control command using membership functions representing the degree of satisfaction ranging from 0 to 1 and a control rule, characterized by altering the control rule depending on the magnitude of the control deviation which is one of the measure of state, and outputting a control command which is optimum for the follow-up toward a predetermined value.

2. A height follow-up control method in a robot, for moving a tool along a workpiece with a predetermined distance from the workpiece, comprising the steps of
comparing the distance between a tool and a workpiece, inputted from a height sensor, with a predetermined value;
performing a fuzzy inference on the basis of the difference between the distance and the predetermined value and the change in the difference; and
outputting a control command which enables the tool to follow up toward the predetermined value in a good response in the case of the absolute value of the difference being equal to or greater than a fixed value and a control command which enables the tool to perform a smooth follow-up operation in the case of said absolute value being smaller than said fixed value.

6

# FIG.1

```
         ┌─────────┐
         │  start  │
         └─────────┘
              │
              ▼
    ┌──────────────────────┐  ╱1
    │ The state of a       │
    │ controlled system under│
    │ evaluation is compared│
    │ with the predetermined│
    │ value                │
    └──────────────────────┘
              │
              ▼
    ┌──────────────────────┐  ╱2
    │ The control deviation │
    │ (E) and the change in │
    │ the control deviation │
    │ (ΔE) are obtained     │
    └──────────────────────┘
              │
              ▼
           ╱ ╲  3
          ╱   ╲         |E|<A
    ◇ |E| : A ◇───────────────┐
          ╲   ╱                │
           ╲ ╱                 │
        |E|≧A                  │
            │                  │
            ▼                  ▼
   ┌──────────────┐  4   ┌──────────────┐  5
   │   Fuzzy      │      │   Fuzzy      │
   │ Inference 1  │      │ Inference 2  │
   └──────────────┘      └──────────────┘
            │                  │
            │◄─────────────────┘
            ▼
   ┌──────────────────────┐  6
   │ A control order based │
   │ on the result of      │
   │ inference is outputted │
   └──────────────────────┘
            │
            ▼
       ┌─────────┐
       │   end   │
       └─────────┘
```

# FIG.2

# FIG.3

# FIG.4 A

9

taught data

P₁    P₂    8

# FIG.4 B

9

height follow-up
control

taught
workpiece
position

deviated
workpiece
position

# FIG.5 A

300
msec

# FIG.5 B

A

240
msec

# FIG.6

height follow-up control

# FIG.7 A

0.3 mm

# FIG.7 B

0.1 mm

# FIG.8

value of the membership function

1.0 — NB NM NS ZO PS PM PB
0.7
0.3
0

-6  -3  0  3  6

elements of the normalized
trapezoid set

# FIG.9

rule R-1: (NS, PS)→PS
rule R-2: (ZO, ZO)→ZO
rule R-3: (ZO, PS)→NS

EP 0 429 680 A1

# INTERNATIONAL SEARCH REPORT

**I. CLASSIFICATION OF SUBJECT MATTER** (if several classification symbols apply, indicate all) ⁶

According to International Patent Classification (IPC) or to both National Classification and IPC

Int. Cl⁵      G05B13/02

**II. FIELDS SEARCHED**

Minimum Documentation Searched ⁷

| Classification System | Classification Symbols |
|---|---|
| IPC | G05B13/00—13/04 |

Documentation Searched other than Minimum Documentation
to the Extent that such Documents are Included in the Fields Searched ⁸

| | |
|---|---|
| Jitsuyo Shinan Koho | 1926 — 1990 |
| Kokai Jitsuyo Shinan Koho | 1971 — 1990 |

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| A | JP, A, 64-151700 (Toshiba Corp.), 14 June 1989 (14. 06. 89), (Family: none) | 1, 2 |

\* Special categories of cited documents: ¹⁰

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| September 20, 1990 (20. 09. 90) | October 8, 1990 (08. 10. 90) |
| International Searching Authority | Signature of Authorized Officer |
| Japanese Patent Office | |

Form PCT/ISA/210 (second sheet) (January 1985)